# EUROPEAN PATENT APPLICATION

(11) **EP 4 379 601 A1**
(43) Date of publication of application: **05.06.2024**
(21) Application number: 22306752.1
(22) Date of filing: 29.11.2022
(51) Int. Cl.: G06K 19/077

(54) **POOR ANTENNA POSITIONING DETECTION**

(71) Applicant: THALES DIS FRANCE SAS, 92190 Meudon (FR)
(72) Inventor: ALLOT, Francis, 13008 MARSEILLE (FR); MERIDIANO, Jean-Luc, 83170 TOURVES (FR); SEBAN, Frédérick, 13390 AURIOL (FR)
(74) Representative: Castelo, Jérôme

(57) **Abstract**

A card (200) having processed areas includes a core layer (104), an antenna pattern (102) on the core layer, and one or more bump-out areas (110) of the antenna pattern having a threshold distance towards a process boundary, where the card passes a continuity test if a cutting or a punching or a milling process fails to create an open circuit at the bump-out areas. The card fails a continuity test if the cutting or the punching or the milling processes creates the open circuit at the bump-out areas.

## Description

### CROSS-REFERENCE TO RELATED APPLICATIONS

Not applicable.

### TECHNICAL FIELD

The present disclosure generally relates to antenna patterns on a processed card. More particularly, but not exclusively, the present disclosure relates to detection of misalignment of antenna patterns during processing of cards. The present disclosure also relates to a corresponding manufacturing process of said card.

### BACKGROUND

Credit cards, identity cards and many forms of physical media require both mass-production and end-user personalization. For example, identity cards may need to be produced for very large population pools, yet every individual card has to uniquely identify the person carrying the card. The high-volume manufacturing phase may be performed on relatively expensive equipment because the equipment cost may be amortized over very large production runs. On the other hand, the end-user personalization may be preferably carried out at customer locations in relatively low volumes, thus, requiring much lower equipment costs.

For many identity cards, security of all information on the card, whether digitally recorded or physical features of the card, is of paramount importance. The security is sometimes tied to some features that reveal whether the media has physically been tampered with. One mechanism for thwarting attempts to tamper with identity cards is lamination. By securing the physical media in a lamination layer that may not be delaminated without destroying the physical pristineness of the media goes very far to protect the security integrity of media.

Other processes in manufacturing a smart card can further include printing, overprinting, laser etching, punching, and milling to name a few. A critical step with many of these cards involves printing an antenna pattern on a layer of a card. A misalignment of the printed antenna on such a card can cause catastrophic failures in the functionality of the card or with at least the wireless functions or aspects of the card. Such failures can create loss that can be preventable or at least curtailed.

In this context, an objective of the present embodiments is to overcome at least in part the aforementioned drawbacks, while also being able to lead to other advantages.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a media card manufactured with a cutting process can include a core layer, an antenna pattern on the core layer, and one or more bump out-areas of the antenna pattern having a threshold distance towards a process boundary, where the card passes a continuity test if the cutting process fails to create an open circuit at the bump-out area.

In some embodiments, the one or more bump-out areas of the antenna pattern are located on an upper periphery of the card. In some embodiments, the one or more bump-out areas of the antenna pattern are located on a lower periphery of the card. In yet other embodiments, the one or more bump-out areas of the antenna pattern are located on an upper and lower periphery of the card. In yet other embodiments, the one or more bump-out areas of the antenna pattern are located on a left and a right periphery of the card.

In some embodiments, the one or more bump-out areas of the antenna pattern are located on vertical and horizontal peripheries of the card. In some embodiments, the one or more bump-out areas of the antenna pattern are located on an upper and lower periphery of a milled aperture of the card.

In yet some other embodiments, the one or more bump-out areas of the antenna pattern are located on vertical and horizontal peripheries of the personalized media card and on an upper and lower periphery of a milled area of the personalized media card.

In some embodiments, the antenna area pattern printed on the core layer is shifted up or down over the threshold distance if the continuity test fails for the one or more bump-out areas of the antenna pattern located on vertical or peripheries of the card or on the upper and lower periphery of a milled aperture.

In some embodiments, the antenna area pattern printed on the core layer is shifted left or right over the threshold distance if the continuity test fails for the one or more bump-out areas of the antenna pattern located on horizontal peripheries of the card

In some embodiments, the threshold distance is a borderline distance of an embossing area to detect and avoid overprinting of the embossing area over the antenna area pattern printed on the core layer.

In some embodiments, the threshold distance is a borderline distance of a security feature to detect and avoid overprinting of a security feature area over the antenna area pattern on the core layer.

In some embodiments, a card having processed areas includes a core layer, an antenna pattern on the core layer, and one or more bump out-areas of the antenna pattern having a threshold distance towards a process boundary, where the card passes a continuity test if a punching or a milling process of the card manufacturing fails to create an open circuit at the bump-out areas.

In some embodiments, the card fails a continuity test if the punching or the milling processes creates the open circuit at the bump-out areas.

In some embodiments, the one or more bump-out areas of the antenna pattern are located on an upper periphery or a lower periphery of the card. In some embodiments, the one or more bump-out areas of the antenna pattern are located on an upper and lower periphery of the card. In some embodiments, one or more bump-out areas of the antenna pattern are located on a left and a right periphery of the card.

In some embodiments, one or more bump-out areas of the antenna pattern are located on an upper and lower periphery of a milled area of the card.

In some embodiments, one or more bump-out areas of the antenna pattern are located on vertical and horizontal peripheries of the card and on an upper and lower periphery of a milled area of the and where the antenna area pattern on the core layer is shifted up or down over the threshold distance if the continuity test fails for the one or more bump-out areas of the antenna pattern located on vertical or horizontal peripheries of the card or on the upper and lower periphery of the milled area.

In some embodiments, a card having processed areas, includes a core layer, an antenna pattern on the core layer, and one or more bump out-areas of the antenna pattern having a threshold distance towards a process boundary, where the card is configured to pass a continuity test if a punching or a milling process fails to create an open circuit at the bump-out areas. In some embodiments, the card fails the continuity test if the punching or the milling process creates the open circuit at the bump-out area indicative of a misaligned antenna on the core layer.

According to another aspect, the present invention also relates to a method of manufacturing a card as previously disclosed. For instance, the method according to the invention comprises:
- providing a core layer,
- providing an antenna pattern on the core layer, and
- providing one or more bump out-areas of the antenna pattern having a threshold distance towards a process boundary,
wherein the method comprises a step of continuity test consisting of a cutting process for forming at least part of the card, said continuity test being considered as passed or positive if said cutting process fails to create an open circuit at the bump-out area.

In some embodiments, the card fails the continuity test if the cutting process creates an open circuit at the bump out area.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
FIG. 1A is an rear plan view of a prior art identity card that includes a conventional antenna that is aligned;
FIG. 1B illustrates a rear plan view of a prior art identity card that has a misaligned antenna that has an embossing area covering the antenna;
FIG. 2 illustrates a rear plan view of an identity card having vertical and horizontal bump out areas as part of the antenna pattern in accordance with the embodiments;
FIG. 3 illustrates a rear plan view of an identity card having vertical bump out areas as part of the antenna pattern in accordance with the embodiments; and
FIG. 4 illustrates a rear plan view of an identity card having horizontal bump out areas as part of the antenna pattern in accordance with the embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

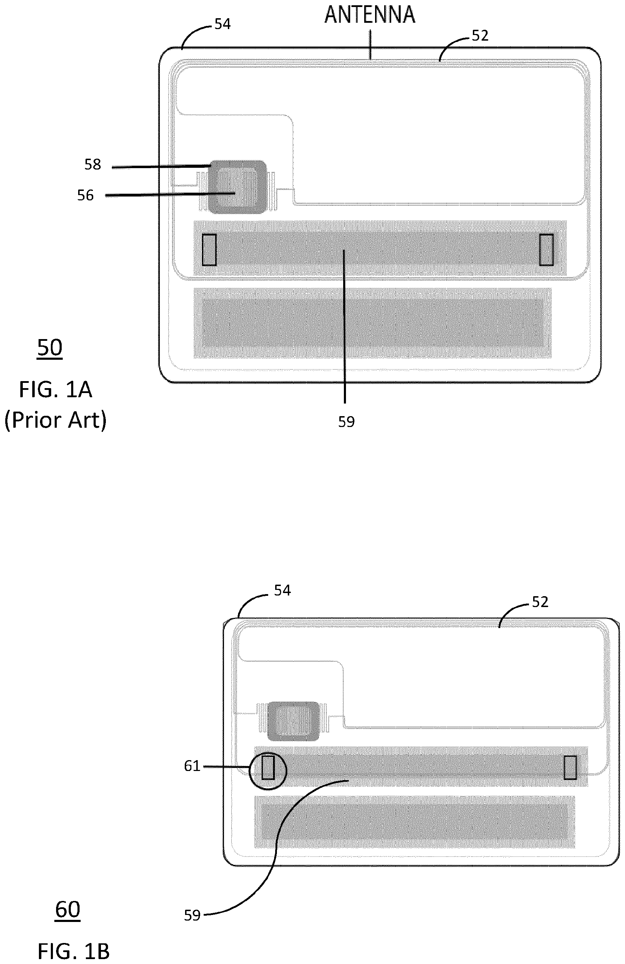

FIG. 1A is an rear plan view of a prior art identity card **50** that allows some level of personalization of the physical appearance of the card post-issuance, e.g., by the customer. Such a card **50** may, for example, have the following elements:
a transparent or opaque polycarbonate (PC) layer **54** having an antenna pattern **52** formed on the surface of the layer 54; the layer 54 can be formed in a credit card shape by being punched out from a larger sheet or layer of plastic or polycarbonate;
a milled out area 58 on or within the layer 54;
a wireless chip 56 placed within the milled out area 58;
one or more embossing areas **59** where signature panels, holograms or other materials may be embossed onto the layer 54.

With this arrangement, several issues can arise if there exists a misalignment between the antenna patterns 52 and other elements or processes. For example, during the embossing step, it is generally too late to detect that an antenna shifted relative to the card body with an excessive deviation due to process printing, collating, lamination or card punching. In such case as shown on the card 60 of FIG. 1B, a personalization center during the embossing step will emboss cards on top of wire antenna as shown in area 61 of FIG. 1B, and will destroy the product or diminish the functionality of the cards for the owner. Such event will have a cost impact and increase the risk of card return from the field. It portrays or suggests poor quality control for the card manufacturer and the bank and creates reputational risk that banks and card manufacturers wish to avoid.

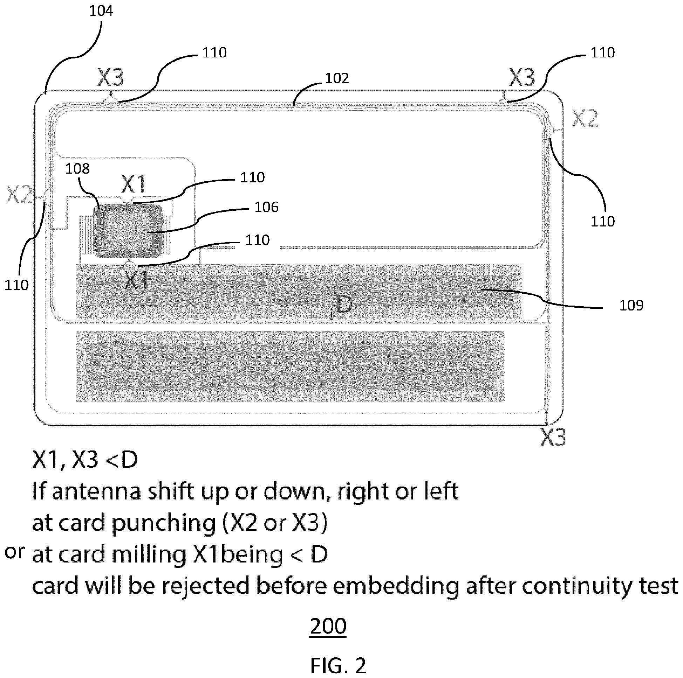

In some embodiments in order to avoid some of the detriments noted above as illustrated in the card 200 of FIG. 2, a card manufactured with a cutting process (such as punching or milling or other suitable processing techniques) can include a core layer 104, an antenna pattern 102 on the core layer 104, and one or more bump-out areas 110 of the antenna pattern having a threshold distance "D" towards a process boundary (such as the periphery of the punched out core layer 104 of the card 200 or the periphery of the milled out area 108), where the card passes a continuity test if the cutting or punching or milling or other process fails to create an open circuit at the bump-out area. Note that the antenna pattern can be formed on the core layer by printing, etching, wire embedding, or by other suitable pattern forming techniques. The bump-out areas can be similarly formed.

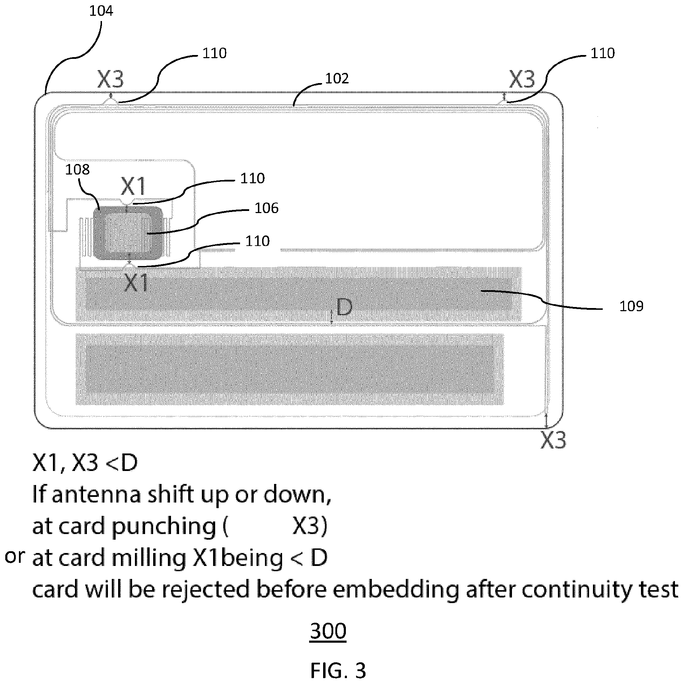

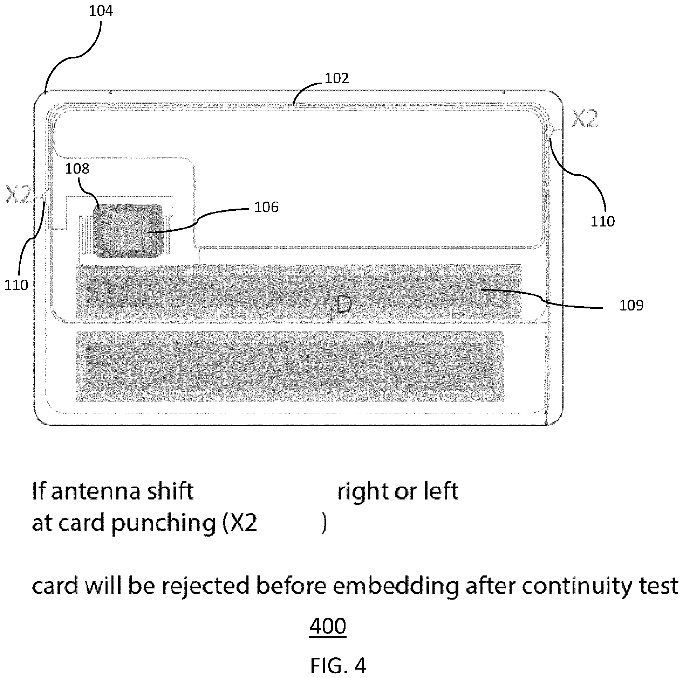

In some embodiments, the one or more bump-out areas 110 of the antenna pattern 102 are located on an upper periphery (see X3) of the card 300 of FIG. 3 and card 200 of FIG. 2. In some embodiments, the one or more bump-out areas 110 of the antenna pattern are located on a lower periphery of the card. In yet other embodiments, the one or more bump-out areas 110 of the antenna pattern are located on an upper and lower periphery of the card, again as shown in FIGs. 2 and 3. In yet other embodiments, the one or more bump-out areas 110 of the antenna pattern are located on a left and a right periphery (see X2) of the card as shown in the card 400 of FIG. 4 (as well as FIG. 2).

In some embodiments, the one or more bump-out areas 110 of the antenna pattern are located on vertical and horizontal peripheries (see X3 and X2 respectively) of the personalized media card as shown in FIG. 2. In some embodiments, the one or more bump-out areas 110 of the antenna pattern 102 are located on an upper and lower periphery (see X1) of a milled area 108 of the card 200 of FIG. 2 or card 300 of FIG. 3.

In yet some other embodiments, the one or more bump-out areas 110 of the antenna pattern 102 are located on vertical and horizontal peripheries (see X3 and X2) of the card and on an upper and lower periphery (see X1) of a milled area 108 of the card 200 as shown in FIG. 2.

In some embodiments, the antenna area pattern printed on the core layer is shifted up or down over the threshold distance if the continuity test fails for the one or more bump-out areas of the antenna pattern located on vertical or peripheries of the card or on the upper and lower periphery of the milled aperture.

In some embodiments, the antenna area pattern printed on the core layer is shifted left or right over the threshold distance if the continuity test fails for the one or more bump-out areas of the antenna pattern located on horizontal peripheries of the card

In some embodiments, the threshold distance is a borderline distance "D" of an embossing area 109 to detect and avoid overprinting of the embossing area over the antenna area pattern 102 printed on the core layer 104. Note that the embossing area can be a security feature and as such, in some embodiments the threshold distance can be a borderline distance of a security feature to detect and avoid overprinting of a security feature area over the antenna area pattern on the core layer. In general, the bump-out areas or dents 110 are created on the embedded antenna patterns 102 at either an edge of the card or layer (104) or around a module cavity or clear window that is typically milled. In some embodiments, the threshold distance "D" can range from 0.5 mm to 3 mm, so that the antenna printing process will have an adequate threshold range to deviate from its ideal positioning and yet still yet pass the continuity test and further ensure other unhampered functionality from other processes or elements in manufacturing the card.

There are several advantages to having the bump-out areas 110 and performing a continuity test before performing several additional process steps including the additional steps of module or wireless chip embedding and card personalization. By determining if a discontinuity exists before module embedding or card personalization (embossing, etc.), defective cards can be eliminated from the field eliminating cards that would have been non-functional or limited in functionality and also saving costs of wasted wireless chips among other cost savings in terms of field returns.

In some embodiments, again referring to FIG. 2, a card 200 having processed areas or boundaries (104, 108) includes a core layer 104, an antenna pattern 102 fromed on the core layer 104, and one or more bump out-areas 110 of the antenna pattern 102 having a threshold distance "D" towards a process boundary, where the card passes a continuity test if a punching or a milling process of the card 200 fails to create an open circuit at the bump-out areas 110.

In some embodiments, the card 200 fails a continuity test if the punching or the milling processes creates the open circuit at the bump-out areas 110.

In some embodiments, the one or more bump-out areas 110 of the antenna pattern 102 are located on an upper periphery or a lower periphery (see X3) of the card. In some embodiments, the one or more bump-out areas 110 of the antenna pattern 102 are located on an upper **and** lower periphery (again, see X3 at upper and lower peripheries) of the card 200. In some embodiments, one or more bump-out areas 110 of the antenna pattern 102 are located on a left and a right periphery (see X2) of the card.

In some embodiments, one or more bump-out areas 110 of the antenna pattern 102 are located on an upper and lower periphery (see X1) of a milled area 108 of the card 200 or of card 300 of FIG. 3.

In some embodiments, one or more bump-out areas 110 of the antenna pattern 102 are located on vertical and horizontal peripheries (see X3 and X2) of the card 200 and on an upper and lower periphery (see X1) of a milled area 108 of the card and where the antenna area pattern 102 printed on the core layer is shifted up or down over the threshold distance if the continuity test fails for the one or more bump-out areas 110 of the antenna pattern 102 located on vertical or horizontal peripheries of the card 200 or on the upper and lower periphery of the milled area 108.

In some embodiments, a card (200, 300, or 400) having processed areas (104 and/or 108), includes a core layer 104, an antenna pattern 102 printed on the core layer, and one or more bump out-areas 110 of the antenna pattern 102 having a threshold distance "D" towards a process boundary, where the card is configured to pass a continuity test if a punching or a milling process fails to create an open circuit at the bump-out areas 110. In some embodiments, the card fails the continuity test if the punching or the milling process creates the open circuit at the bump-out area 110 indicative of a misaligned antenna formed on the core layer 104.

It is indicated in FIG.2 that X1, X3 < D. It is also stated in FIG.2 that if antenna shift up or down, right or left at card punching (X2 or X3) or at card milling X1 being < D, card will be rejected before embedding after continuity test. It is indicated in FIG. 3 that X1, X3 < D. It is also stated in FIG.3 that if antenna shift up or down, at card punching (X3) or at card milling X1 being < D, card will be rejected before embedding after continuity test. It is indicated in FIG. 4 that if antenna shift right or left at card punching (X2), card will be rejected before embedding after continuity test.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A card (200, 300, 400) comprising:
a core layer (104);
an antenna pattern (102) on the core layer (104); and
one or more bump out-areas (110) of the antenna pattern (102) having a threshold distance towards a process boundary, wherein the card is configured to pass a continuity test if a cutting process fails to create an open circuit at the bump-out area (110).

2. A card (200) according to claim 1, wherein the card is manufactured with the cutting process and wherein the card passes a continuity test if the cutting process fails to create an open circuit at the bump-out area (110).

3. The card (200) of claim 1, wherein the one or more bump-out areas (110) of the antenna pattern (102) are located on an upper periphery of the card (200).

4. The card (200) of claim 1, one or more bump-out areas (110) of the antenna pattern (102) are located on a lower periphery of the card (200).

5. The card (200) of claim 1, one or more bump-out areas (110) of the antenna pattern (102) are located on an upper and lower periphery of the card (200).

6. The card (200) of claim 1, one or more bump-out areas (110) of the antenna pattern (102) are located on a left and a right periphery of the card (200).

7. The card (200) of claim 1, one or more bump-out areas (110) of the antenna pattern (102) are located on vertical and horizontal peripheries of the card (200).

8. The card (200) of claim 1, one or more bump-out areas (110) of the antenna pattern (102) are located on an upper and lower periphery of a milled aperture of the card (200).

9. The card (200) of claim 1, one or more bump-out areas (110) of the antenna pattern (102) are located on vertical and horizontal peripheries of the card (200) and on an upper and lower periphery of a milled area (108) of the card.

10. The card (200) of claim 9, wherein the antenna area pattern (102) on the core layer (104) is shifted up or down over the threshold distance if the continuity test fails for the one or more bump-out areas (110) of the antenna pattern (102) located on vertical or peripheries of the card (200) or on the upper and lower periphery of the milled aperture.

11. The card (200) of claim 9, wherein the antenna area pattern (102) on the core layer (104) is shifted left or right over the threshold distance if the continuity test fails for the one or more bump-out areas (110) of the antenna pattern (102) located on horizontal peripheries of the card (200).

12. A card (300) according to claim 1, wherein the card has processed areas and wherein the card passes a continuity test if a punching or a milling process fails to create an open circuit at the bump-out areas (110).

13. The card (300) of claim 12, wherein the card fails a continuity test if the punching or the milling processes creates the open circuit at the bump-out areas (110).

14. The card (300) of claim 12, wherein the one or more bump-out areas (110) of the antenna pattern (102) are located on an upper periphery or a lower periphery of the card (300) or on the upper periphery and the lower periphery of the card (300).

15. The card (300) of claim 12, wherein one or more bump-out areas (110) of the antenna pattern (102) are located on a left and a right periphery of the card (300).

16. The card (300) of claim 12, wherein one or more bump-out areas (110) of the antenna pattern (102) are located on an upper and lower periphery of a milled area of the card (300).

17. The card (300) of claim 12, wherein one or more bump-out areas (110) of the antenna pattern (102) are located on vertical and horizontal peripheries of the card (300) and on an upper and lower periphery of a milled area (108) of the card (300) and wherein the antenna area pattern (102) on the core layer (104) is shifted up or down over the threshold distance if the continuity test fails for the one or more bump-out areas (110) of the antenna pattern (102) located on vertical or horizontal peripheries of the card (300) or on the upper and lower periphery of the milled area (108).

18. A card (200, 300, 400) according to any of preceding claims, wherein the threshold distance is a borderline distance of an embossing area (109) to detect and avoid overprinting of the embossing area (109) over the antenna area pattern (102) on the core layer (104).

19. A card (200, 300, 400) according to any of preceding claims, wherein the threshold distance is a borderline distance of a security feature to detect and avoid overprinting of a security feature area over the antenna area pattern (102) on the core layer (104).

20. A card (400) according to claim 1, wherein the card (400) has processed areas and wherein the card (400) is configured to pass a continuity test if a punching or a milling process fails to create an open circuit at the bump-out areas (110).

21. The card (400) of claim 20, wherein the card (400) fails the continuity test if the punching or the milling process creates the open circuit at the bump-out area (110) indicative of a misaligned antenna on the core layer (104).

22. A method of forming a card (200, 300, 400) according to any of the previous claims, said method comprising:
- providing a core layer (104),
- providing an antenna pattern (102) on the core layer (104), and
- providing one or more bump out-areas (110) of the antenna pattern (102) having a threshold distance towards a process boundary,
wherein the method comprises a step of continuity test consisting of a cutting process for forming at least part of the card (200, 300, 400), said continuity test being considered as passed or positive if said cutting process fails to create an open circuit at the bump-out area (110).

23. A method according to claim 22, wherein the card (200, 300, 400) fails the continuity test if the cutting process creates an open circuit at the bump-out area (110).
